# EUROPEAN PATENT APPLICATION

(11) **EP 1 564 081 A2**
(43) Date of publication of application: **17.08.2005**
(21) Application number: 05000395.3
(22) Date of filing: 11.01.2005
(51) Int. Cl.: B60R 21/16, B60R 21/26

(54) **Airbag apparatus**

(30) Priority: 06.02.2004 JP 2004030996; 08.03.2004 JP 2004064555
(71) Applicant: TAKATA CORPORATION, Minato-ku, Tokyo 106-8510 (JP)
(72) Inventor: Abe, Kazuhiro, Minato-ku Tokyo 106-8510 (JP); Senoh, Rika, Minato-ku Tokyo 106-8510 (JP)
(74) Representative: Banzer, Hans-Jörg, Dipl.-Ing.

(57) **Abstract**

To provide an airbag apparatus having an airbag provided with a plurality of chambers, or an airbag apparatus including a plurality of airbags, which can be configured in such a manner that not only the sequence of inflation of the respective chambers or the respective airbags, but also the internal pressure upon inflation can be controlled independently, an airbag apparatus (1) includes an airbag (10) having the interior being partitioned into a first chamber (10A) and a second chamber (10B), an inflator (30) for inflating the airbag (10), a flow control member (40) for allowing gas from the inflator (30) to flow independently into the first chamber (10A) and the second chamber (10B), and a retainer (50). The inflator (30) includes two gas generating units; a first gas generating unit (31) and a second gas generating unit (32), being capable of performing gas generating action independently, and the flow control member (40) allows gas from the first gas generating unit (31) to flow into the first chamber (10A) of the airbag (10), and gas from the second gas generating unit (32) to flow into the second chamber (10B).

## Description

### [Technical Field]

The present invention relates to an airbag apparatus to be installed on a motor vehicle or the like.

### [Background Art]

An airbag apparatus to be installed on a motor vehicle or the like includes an airbag and an inflator for inflating the airbag.

When collision of a vehicle is detected by a sensor, the inflator is activated and the airbag is inflated by gas generated from the inflator.

In Japanese Unexamined Patent Application Publication No. 2-74440, an airbag in which the interior of an airbag for a driver's seat is divided into a center chamber and two peripheral chambers by partitioning panels, and the center chamber is inflated first and then the peripheral chambers are inflated is disclosed. The partitioning panels are formed with through holes for allowing gas to flow. The partitioning panel connects the rear side and the front side of the airbag, and has a function to prevent the airbag from projecting forward when inflated.

United States Patent No. 6,254,121 discloses, in contrast to it, an airbag apparatus for a driver's seat configured to inflate the peripheral chambers first, and then inflate the center chamber.

In either of the airbag apparatus described above, only one single inflator is provided. In the former Japanese Unexamined Patent Application Publication No. 2-74440, the inflator is installed so as to inject gas to the center chamber, and in the latter United State Patent No. 6,254,121, the inflator is installed so as to inject gas to the peripheral chambers.

### [Problems to be Solved by the Invention]

In the airbag apparatus in the related art described above, although the sequence of inflation of the center chamber and the peripheral chambers can be controlled, the inner pressure of the respective chambers cannot be controlled independently.

It is an object of the present invention to provide an airbag apparatus including an airbag having a plurality of chambers, or a plurality of airbags, wherein not only the sequence of inflation of the respective chambers or the respective airbags, but also the internal pressure when inflated can be controlled independently.

### [Means for Solving the Problems]

The above object is achieved by an airbag apparatus according to claim 1 and by an airbag apparatus according to claim 4. The dependent claims define preferred and advantageous embodiments of the invention.

The airbag apparatus according to a first aspect of the present invention is an airbag apparatus including an airbag having a plurality of chambers and gas generating means for inflating the airbag, characterized in that supply of gas from the gas generating means to at least one of the chambers can be controlled independently from supply of gas from the gas generating means to other chambers.

According to an embodiment, the airbag apparatus according to the first aspect is characterized in that the gas generating means includes an inflator having a plurality of gas generating units capable of performing gas generating action independently, and gas from the respective gas generating units is supplied separately to the respective chambers.

According to a further embodiment, the airbag apparatus according to the first aspect is characterized in that the gas generating means includes a plurality of inflators capable of performing gas generating action independently, and gas from the respective inflators is supplied separately to the respective chambers.

An airbag apparatus according to a second aspect of the present invention is an airbag apparatus including a plurality of airbags and gas generating means for inflating the respective airbags, characterized in that supply of gas from the gas generating means to at least one of the airbags can be controlled independently from supply of gas from the gas generating means to other airbags.

According to an embodiment, the airbag apparatus according to the second aspect is characterized in that the gas generating means includes an inflator having a plurality of gas generating units capable of performing gas generating action independently, and gas from the respective gas generating units is supplied separately to the respective airbags.

According to a further embodiment, the airbag apparatus according to the second aspect is characterized in that the gas generating means includes a plurality of inflators capable of performing gas generating action independently, and gas from the respective inflators is supplied separately to the respective airbags.

### [Advantages]

With the airbag according to the first aspect of the present invention, supply of gas from the gas generating means to at least one of the chambers out of the plurality of chambers in the airbag can be controlled independently from supply of gas to other chambers. Therefore, by controlling the timing of activation or output of the respective gas generating means independently, not only the sequence of inflation of respective chambers in the airbag, but also the internal pressure of the respective chambers when inflated can be controlled independently.

With the airbag apparatus according to the second aspect of the present invention, even when there are provided a plurality of airbags, supply of gas from the gas generating means to at least one of the airbags out of the plurality of airbags can be controlled independently from supply of gas from the gas generating means to other airbags. Therefore, by controlling the timing of activation or output of the respective gas generating means independently, not only the sequence of inflation of respective airbags, but also the internal pressure of the respective airbags when inflated can be controlled independently.

In the present invention, the airbag apparatus may be configured such that the gas generating means includes a inflator having a plurality of gas generating units capable of performing gas generating action independently and gas from the respective gas generating units is supplied separately to the respective chambers or airbags, or such that the gas generating means includes a plurality of inflators capable of performing gas generating action independently and gas from the respective inflators is supplied separately to the respective chambers or airbags.

When the gas generating means includes the inflator having a plurality of gas generating units capable of performing gas generating operation independently, since gas can be supplied to the plurality of chambers or airbags respectively from one single inflator, the number of components of the airbag apparatus can be reduced.

When the gas generating means includes a plurality of inflators capable of performing gas generating action independently, flexibility of layout of the inflators with respect to the respective chambers or airbags is increased.

### [Best Mode for Carrying Out the Invention]

Referring now to the drawings, embodiments of the present invention will be described.

### [Brief Description of the Drawings]

Fig. 1 is a vertical cross-sectional view of an airbag apparatus according to an embodiment.
Fig. 2 is a block diagram of a flow control member (gas flow path defining member) of the airbag in Fig. 1.
Fig. 3 is an exploded perspective view of the airbag apparatus in Fig. 1.
Fig. 4 is a vertical cross-sectional view of an airbag apparatus according to another embodiment.
Fig. 5 is a perspective view of a flow control member according to the embodiment.
Fig. 6 is an exploded perspective view of the flow control member according to the embodiment.
Fig. 7 is a vertical cross-sectional view of an airbag according to another embodiment.
Fig. 8 is an exploded perspective view of the airbag shown in Fig. 7.
Fig. 9 is a vertical cross-sectional view of an airbag according to still another embodiment.

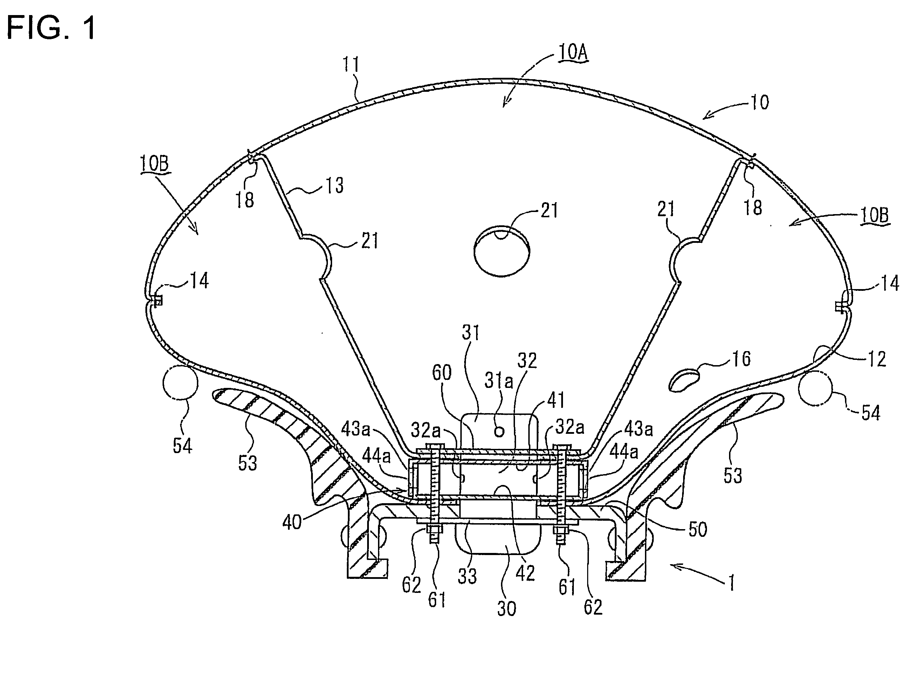

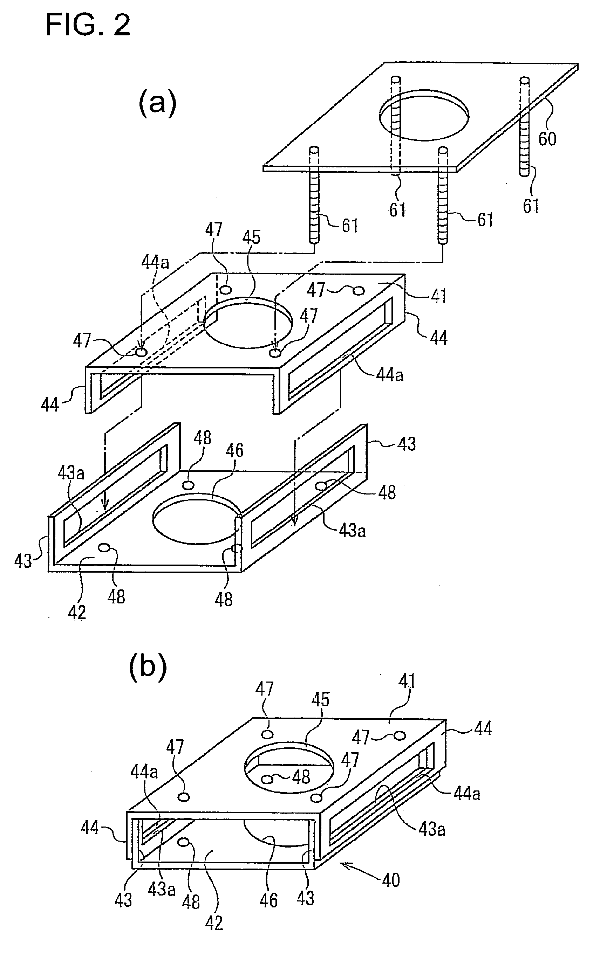

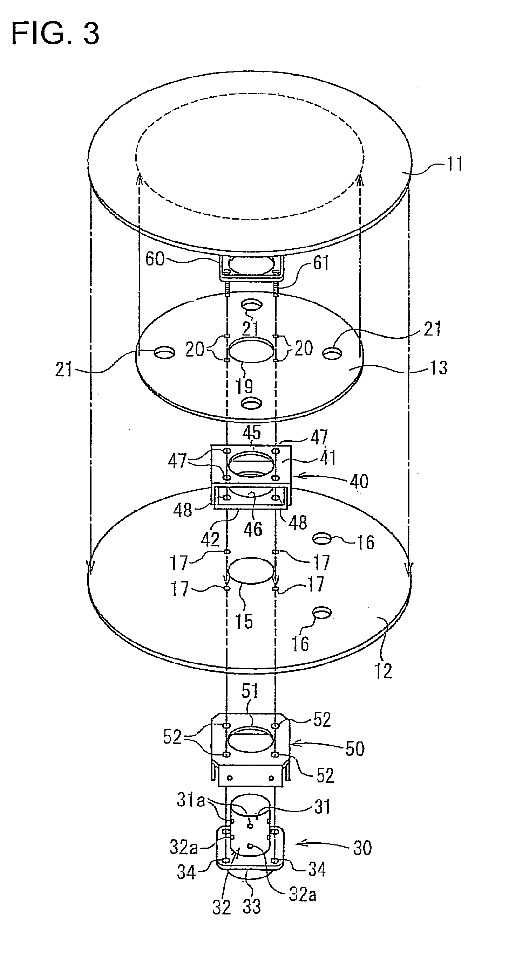

Fig. 1 is a vertical cross-sectional view of an airbag apparatus according to an embodiment; Fig. 2(a) is an exploded perspective view of a flow control member (gas flow defining member) of the airbag apparatus; Fig. 2(b) is a perspective view after assembly of the flow control member; and Fig. 3 is an exploded perspective view of the airbag apparatus.

An airbag apparatus 1 includes an airbag 10 having an interior partitioned into a first chamber 10A and a second chamber 10B, an inflator (gas generator) 30 for inflating the airbag 10, a flow control member (gas flow path defining member) 40 for allowing gas from the inflator 30 to flow independently into the first chamber 10A and the second chamber 10B, and a retainer 50 to which the airbag 10, the inflator 30, and the flow control member 40, and so on are attached.

In this embodiment, the inflator 30 includes two gas generating units or portions capable of generating gas independently; a first gas generating unit 31 and a second gas generating unit 32, and the flow control member 40 allows gas from the first gas generating unit 31 to flow into the first chamber 10A of the airbag 10, and allows gas from the second gas generating unit 32 to flow into the second chamber 10B.

The airbag 10 includes a front panel 11, a rear panel 12, and an inner panel 13, which are formed of circular fabric respectively, as shown in Fig. 3. The front panel 11 and the rear panel 12 have the same diameter, and are joined by stitching around the outer periphery thereof by a seam 14 formed of a yarn or the like to form a bag-shaped airbag envelope. The stitched portion has an annular shape extending along the outer peripheral portions of the front panel 11 and the rear panel 12.

The rear panel 12 is formed with an opening 15 for an inflator and a vent hole 16. The opening 15 for an inflator is disposed at the center of the rear panel 12. Bolt insertion holes 17 are formed around the opening 15 for an inflator.

The inner panel 13 is provided inside the airbag 10. The inner panel 13 is disposed substantially concentrically with the front panel 11 and the rear panel 12, and the outer peripheral portion (the portion which corresponds to the peripheral portion of the inner panel 13 on the distal side as shown in Fig. 1 in a state in which the airbag 10 is inflated) is stitched by a seam 18 formed of a yarn or the like with respect to the intermediate portion between the center portion and the peripheral portion of the front panel 11. This stitched portion has an annular shape extending along the outer periphery of the inner panel 13.

An opening 19 for an inflator to be disposed substantially concentrically with the opening 15 for an inflator formed on the rear panel 12 is formed at the center portion of the inner panel 13 (at the portion which corresponds to the rear end side of the inner panel 13 as shown in Fig. 1 in a state in which the airbag 10 is inflated). These openings 15, 19 have substantially the same diameter. Bolt insertion holes 20, which are aligned with the bolt insertion holes 17 of the rear panel 12, are formed around the opening 19 formed on the inner panel 13.

The inner panel 13 is formed with inner vent holes (air vents) 21 at the positions relatively close to the outer peripheral edge thereof.

The peripheral portion of the opening 19 for an inflator of the inner panel 13 is connected to the peripheral portion of an inflator mounting port 51 of the retainer 50 together with the peripheral portion of the opening 15 for an inflator of the rear panel 12 by a retaining ring 60 via the flow control member 40. The retaining ring 60 is an annular member extending along the peripheral portion of the opening 19 for an inflator, and formed with stud bolts to be inserted into the above-described bolt insertion holes 17, 20 projecting from the back surface (surface on the side which faces the peripheral portion of the opening 19 for an inflator). Bolt insertion holes 52 through which the stud bolts 61 are inserted are formed also around the inflator mounting port 51 of the retainer 50.

The interior of the airbag 10 is partitioned by the inner panel 13 into the first chamber 10A and the second chamber 10B which surround the first chamber 10A. The first chamber 10A corresponds to the inside of the inner panel 13.

In this embodiment, as shown in Figs. 2(a), (b), the flow control member 40 includes a top plate 41 and a bottom plate 42 disposed so as to oppose to each other at a predetermined distance. In this embodiment, as shown in the drawing, the top plate 41 and the bottom plate 42 are respectively formed substantially into a square flat plate. Upright members 43, 43 extending upward substantially at a right angle toward the top plate 41 coming into abutment with the lower surface of the top plate 41 as spacers are formed on a pair of sides of the bottom plate 42 so as to project therefrom. Leg members 44, 44 which are aligned with the outwardly facing surfaces of the upright members 43, 43 are formed on a pair of sides of the top plate 41 so as to extend in the vertical direction.

As shown in Fig. 2(a), by covering the top plate 41 on the bottom plate 42 while aligning the respective leg member 44 on the outwardly facing surfaces of the respective upright member 43, the substantially box-shaped flow control member 40 as shown in Fig. 2(b) are formed. The space formed between the top plate 41 and the bottom plate 42 corresponds to the gas flowing space.

In this embodiment, the respective upright members 43 and the respective leg members 44 are formed with window holes 43a, 44a for allowing gas to flow through so as to communicate the inside and outside of the flow control member 40.

At the centers of the top plate 41 and the bottom plate 42, there are formed openings 45, 46 for an inflator, such as the openings 19, 15 for an inflator on the inner panel 13 and rear panel 12, as described above. These openings 45, 46 are disposed concentrically with respect to each other. Bolt insertion holes 47, 48 are formed around the openings 45, 46 so as to align with the respective bolt insertion holes 20, 17 described above when the openings 45, 46 are disposed concentrically with the openings 19, 15 of the inner panel 13 and the rear panel 12 respectively.

The inflator 30 is formed substantially into a cylindrical shape in this embodiment. The inflator 30 is provided with a first gas generating unit 31 and a second gas generating unit 32 at axially different positions on distal side of the inflator 30. The second gas generating unit 32 is disposed below the first gas generating unit 31 in Fig. 1. The first and second gas generating units 31, 32 are formed with gas injecting ports 31a, 32a on the side peripheral surfaces thereof, respectively. The respective gas generating units 31, 32 inject gas radially from the gas injection ports 31a, 32a.

A flange 33 for securing the inflator is projected from the side peripheral surface of the inflator 30 at the mid section in the axial direction (the rear side with respect to the gas generating units 31, 32) so as to project therefrom. The flange 33 is formed with bolt insertion holes 34 (Fig. 3).

The inflator 30 is fitted at the distal side into the inflator mounting port 51 of the retainer. The flange 33 is aligned with the peripheral portion of the inflator mounting port 51 on the lower side of the retainer 50. The bolt insertion holes 34 of the flange 33 are aligned with the bolt insertion holes 52 around the inflator mounting port 51.

The airbag 10 is mounted to the retainer 50 by disposing the flow control member 40 between the inner panel 13 and the rear panel 12 (that is, in the second chamber 10B), aligning the openings 45, 19 for an inflator of the top plate 41 of the flow control member 40 and the inner panel 13, and the openings 46, 15 for an inflator of the bottom plate 42 of the flow control member 40 and the rear panel 12 respectively, and aligning the opening 15 for an inflator of the rear panel 12 with the inflator mounting port 51 of the retainer 50.

In this case, the distal side of the inflator 30 fitted into the inflator mounting port 51 is inserted into the openings 15, 46, 45, 19 and, as shown in Fig. 1, the first gas generating unit 31 which comes first is disposed in the first chamber 10A, and the second gas generating unit 32 which comes below the first gas generating unit 31 is disposed within the flow control member 40 (that is, the space between the top plate 41 and the bottom plate 42 which communicates the internal space in the second chamber 10B). Therefore, when the inflator 30 (the first and second gas generating units 31, 32) starts gas injection, gas from the first gas generating unit 31 is supplied only into the first chamber 10A in the first place, and gas from the second gas generating unit 32 is supplied via the flow control member 40 only into the second chamber 10B in the first place.

Subsequently, the peripheral portion of the opening 19 for an inflator of the inner panel 13 is pressed against the top plate 41 of the flow control member 40 by the retaining ring 60 from the inside of the inner panel 13 (within the first chamber 10A), and the peripheral portion of the opening 15 for an inflator of the rear panel 12 is pressed against the peripheral portion of the inflator mounting port 51 of the retainer 50 via the flow control member 40 (bottom plate 42). When aligning the retaining ring 60 to the peripheral portion of the opening 19 for an inflator, the stud bolts 61 of the retaining ring 60 are inserted into the bolt insertion holes 20, 47, 48, 17, 52, 34, and are tightened with nuts 62 screwed into the distal ends thereof, so that the airbag 10 (inner panel 13, rear panel 12), the flow control member 40, and the inflator 30 are secured to the retainer 50.

Subsequently, the airbag 10 is folded, and a module cover 53 is attached to the retainer 50 so as to cover the folded body of the airbag 10, whereby the airbag apparatus 1 shown in Fig. 1 is formed. The airbag apparatus 1 is installed in a steering wheel (only a rim portion 54 is shown in Fig. 1) of a motor vehicle.

The airbag apparatus 1 is provided with a control unit (not shown) for detecting collision of the vehicle and activating the inflator 30. The control unit has an adjusting function for adjusting an output or a timing of activation of the first and second gas generating units 31, 32 of the inflator 30 according to the weight, the physical constitution, and the seated position (the distance from the steering wheel) or the like of an occupant seated on a driver's seat of the motor vehicle. Although not shown in the drawing, the motor vehicle to which this airbag apparatus 1 is installed is provided with detecting means for detecting the weight, the physical constitution, and the seated position (the distance from the steering wheel) or the like of the occupant seated on the driver's seat. The control unit adjusts the output or the timing of activation of the first and second gas generating units 31, 32 based on the detected value of the detecting means.

In the airbag apparatus 1 configured as described above, the inflator 30 (the first gas generating unit 31 and the second gas generating unit 32) is activated upon collision of the vehicle, and gas is injected into the airbag 10 (the first chamber 10A and the second chamber 10B). The airbag 10 is inflated by the gas, opens the module cover 53, and is deployed in the cabin to protect the occupant on the driver's seat.

In the airbag apparatus 1, when the inflator 30 (the first gas generating unit 31 and the second gas generating unit 32) starts gas injection, gas from the first gas generating unit 31 is substantially supplied only into the first chamber 10A of the airbag 10 in the first place to contribute to the inflation of the first chamber, and gas from the second gas generating unit 32 is substantially supplied only into the second chamber 10B in the first place to contribute to the inflation of the second chamber 10B. Therefore, by controlling the output or the timing of activation of the first and second gas generating units 31, 32 independently, the sequence of inflation between the first chamber 10A and the second chamber 10B (the timing of initiation of inflation or the timing of completion of inflation) and the internal pressure upon inflation can be controlled independently.

For example, when the distance between the occupant and the steering wheel 54 is relatively small, or when the weight or the physical constitution of the occupant is relatively small, the output of the first gas generating unit 31 is set to a relatively low value. Accordingly, elevation of the internal pressure and expansion toward the occupant of the first chamber 10A are kept down, so that the occupant can be received relatively softly. In this arrangement as well, since sufficient amount of gas can be supplied to the second chamber 10B from the second gas generating unit 32, the entire airbag 10 can be inflated over a sufficiently wide range.

Also, when the distance between the occupant and the steering wheel 54 is significantly large, the output of the first gas generating unit 31 is set to a high value and the output of the second gas generating unit 32 is set to a relatively low value. In this arrangement, sideward inflation of the airbag 10 is kept down, and the entire airbag 10 is expanded largely toward the occupant. Accordingly, the occupant can be received relatively in an early stage and reliably.

In the present embodiment, when the inflated airbag 10 hits the occupants, gas in the first chamber 10A and the second chamber 10B is flown out through the inner vent hole 21 or the vent hole 16 to absorb the impact.

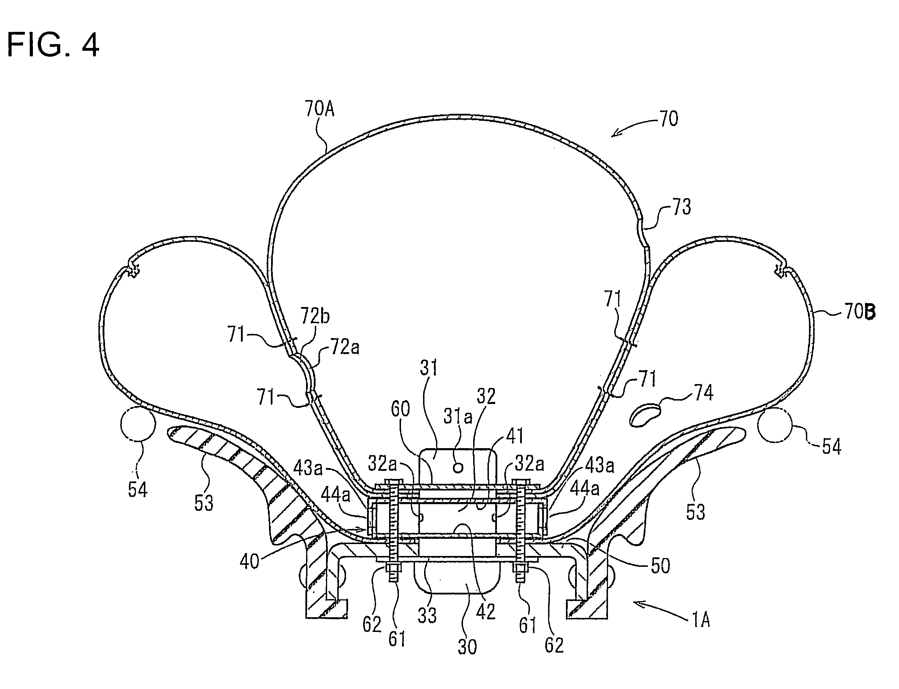

Fig. 4 is a vertical cross-sectional view of an airbag apparatus 1A according to another embodiment.

In the present embodiment, the airbag apparatus 1A includes an airbag 70 having a first small airbag 70A and a second small airbag 70B. As shown in Fig. 4, the first small airbag 70A has a substantially spherical shape in an inflated state. The second small airbag 70B is disposed behind the first small airbag 70A (on the side of the first small airbag 70A opposite from the occupant-opposed surface) and is adapted to inflate in a shape expanded widely sideward (radial direction) from the rear end surface (the surface located behind) along the side peripheral surface of the first small airbag 70A.

In this embodiment, the peripheral side surface of the first small airbag 70A, and the intermediate area between the center portion of the front surface (the surface on the occupant's side) and the peripheral portion of the second small airbag 70B are unitized by stitching. Reference numeral 71 shows a seam of this stitching.

The stitched surfaces of the first small airbag 70A and the second small airbag 70B are formed with inner vent holes 72a, 72b respectively at the positions aligned with each other, and the first small airbag 70A and the second small airbag 70B communicates with each other via the inner vent holes 72a, 72b. Part of the seam 71 is extended so as to stitch around the peripheries of the inner bent holes 72a, 72b, so that the peripheral portions thereof are joined by the seam 71.

Reference numerals 73, 74 designate vent holes for allowing gas in the respective small airbags 70A, 70B to flow out.

At the center portion of the rear surface of the first small airbag 70A and at the center portion of the front surface of the second small airbag 70B, there are provided openings (reference numerals are omitted) for an inflator respectively. Likewise, at the center portion of the rear surface of the second small airbag 70B, there is provided an opening (reference numeral is omitted) for an inflator similar to those described above. These openings for an inflator are similar to the openings 19, 15 for an inflator on the inner panel 13 and the rear panel 11 shown in the embodiment in Fig. 1 to Fig. 3 shown above, and can be disposed concentrically.

Around the respective openings for an inflator, there are formed bolt insertion holes (reference numerals are omitted) for inserting the stud bolts 61 of the retaining ring 60.

Other structures of the airbag apparatus 1A except for the airbag 70 are the same as the airbag 1 shown in Fig. 1 to 3, and reference numerals in Fig. 4 which are the same as in Fig. 1 to Fig. 3 shown above represent the same parts.

The airbag 70 is mounted to the retainer 50 by disposing the flow control member 40 within the second small airbag 70B, aligning the respective openings for an inflator on the top plate 41 of the flow control member 40, at the center portion of the rear end surface of the first small airbag 70A and at the center portion of the front surface of the second small airbag 70B, aligning the respective openings for an inflator on the bottom plate 42 of the flow control member 40 and at the center potion of the rear end surface of the small airbag 70B, and then aligning the opening for an inflator on the center portion of the rear surface of the small airbag 70B and the inflator mounting port (reference numeral is omitted) of the retainer 50.

In this case, the distal side of the inflator 30 fitted into the inflator mounting port is inserted into the openings for an inflator, and as shown in Fig. 4, the first gas generating unit 31 which comes first is disposed within the first small airbag 70A, and then the second gas generating unit 32 which comes below the first gas generating unit 31 is disposed within the flow control member 40 (the space between the top plate 41 and the bottom plate 42 which communicates with the inner space of the second small airbag 70B). Therefore, when the inflator 30 (the first and second gas generating units 31, 32) starts gas injection, gas from the first gas generating unit 31 is supplied only into the first small airbag 70A in the first place, and gas from the second gas generating unit 32 is supplied only to the second small airbag 70B via the flow control member 40 in the first place.

Subsequently, the peripheral portions of the openings for an inflator at the center portion of the rear end surface of the first small airbag 70A and at the center of the front surface of the second small airbag 70B is pressed against the top plate 41 of the flow control member 40, and the peripheral portion of the opening for an inflator at the center portion of the rear surface of the second small airbag 70B is pressed against the peripheral portion of the inflator mounting port of the retainer 50 via the flow control member 40 (the bottom plate 42). Then, the stud bolts 61 of the retaining ring 60 are passed through the respective bolt through holes, and are tightened with the nuts 62 screwed into the distal ends thereof, so that the airbag 70 (the center portion of the rear end surface of the second small airbag 70A, the center portion of the front surface and the center portion of the rear surface of the second small airbag 70B) and the inflator 30 can be secured to the retainer 50.

The subsequent sequence of configuring the airbag apparatus 1A are the same as those in the airbag apparatus 1 in Fig. 1 to Fig. 3 shown above.

In this airbag apparatus 1A, when the inflator 30 (the first gas generating unit 31 and the second gas generating unit 32) starts gas injection, gas from the first gas generating unit 31 is substantially supplied only into the first small airbag 70A in the first place to contribute to the inflation of the first small airbag 70A, and gas from the second gas generating unit 32 is supplied only into the second small airbag 70B in the first place to contribute to the inflation of the second small airbag 70B. Therefore, by controlling the output or the timing of activation of the first and second gas generating units 31, 32 independently, the sequence of inflation between the first small airbag 70A and the second small airbag 70B (the timing of initiation of inflation or the timing of completion of inflation) and the internal pressure upon inflation can be controlled independently.

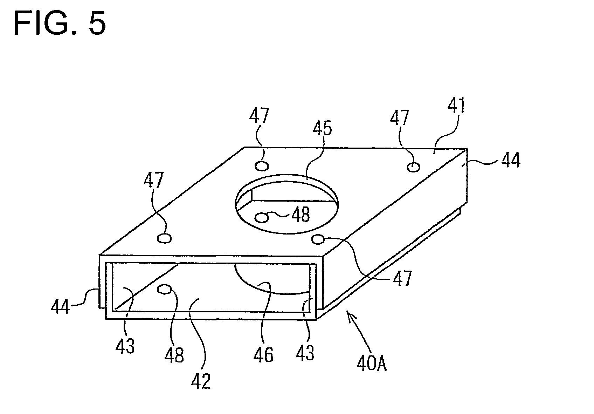

The above-described respective embodiments are configured in such a manner that by providing the window holes 43a, 44a for allowing gas to flow through respectively on the respective upright members 43, 43 provided so as to project from the pair of sides of the bottom plate 42 of the flow control member 40 and the respective leg members 44, 44 provided so as to extend vertically from the pair of sides of the top plate 41 and aligned with the outwardly facing surfaces of the upright members 43, 43, gas also flows sideways from the side surfaces where these upright members 43 and the leg members 44 are provided. However, these window holes 43a, 44a may be omitted. Fig. 5 is a perspective view of the flow control member 40A configured as described above.

In the flow control member 40A in Fig. 5, since the respective upright members 43 and the leg members 44 are not formed with window holes for allowing gas to flow through, gas injected from the inflator into the flow control member 40A flows out through the side surfaces of the flow control member 40A where the upright members 43 and the leg members 44 are not provided out of four side surfaces of the flow control member 40A. With the flow control member 40A thus configured, gas from the inflator can be guided toward the predetermined direction.

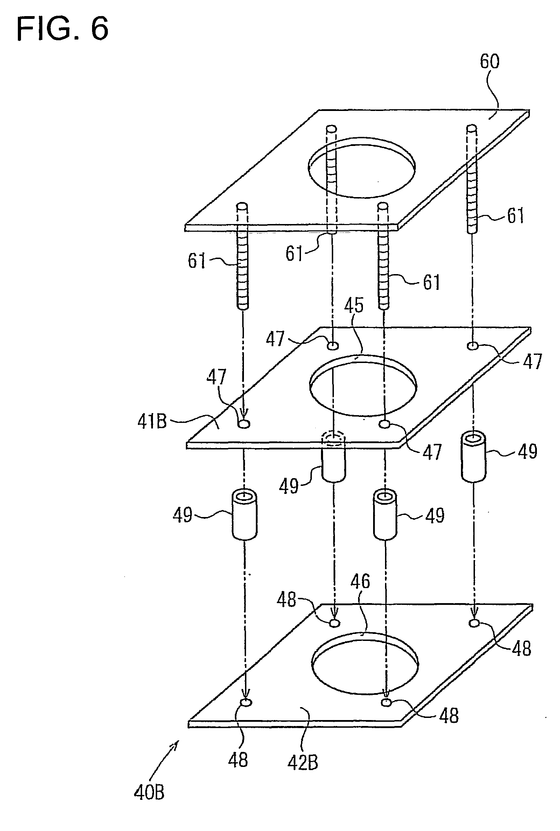

In the respective embodiments described above, the upright members 43, 43 extending upright from the pair of sides of the bottom plate 42 toward the top plate 41 are interposed between the bottom plate 42 and the top plate 41 as spacers for defining a gas flow space. However, it is also possible to define the gas flow space by interposing spacer members provided separately from the top plate and the bottom plate therebetween. Fig. 6 is an exploded perspective view of a flow control member 40B configured as described above.

In the flow control member 40B in Fig. 6, the upright members 43 as spacers are not formed so as to project from the sides of a bottom plate 42B, and cylindrical spacers 49 formed separately from the members described above are interposed between the bottom plate 42B and the top plat 41B. The cylindrical spacers 49 cover the respective stud bolts 61 of the retaining ring 60, which penetrate the top plate 41B and the bottom plate 42B in the vertical direction.

In this manner, when it is configured to define the gas flow space by interposing the cylindrical spacers 49 formed separately from the top plate 41B and the bottom plate 42B therebetween, the size of the gas flow space can easily be changed by changing the axial length of the cylindrical spacer 49.

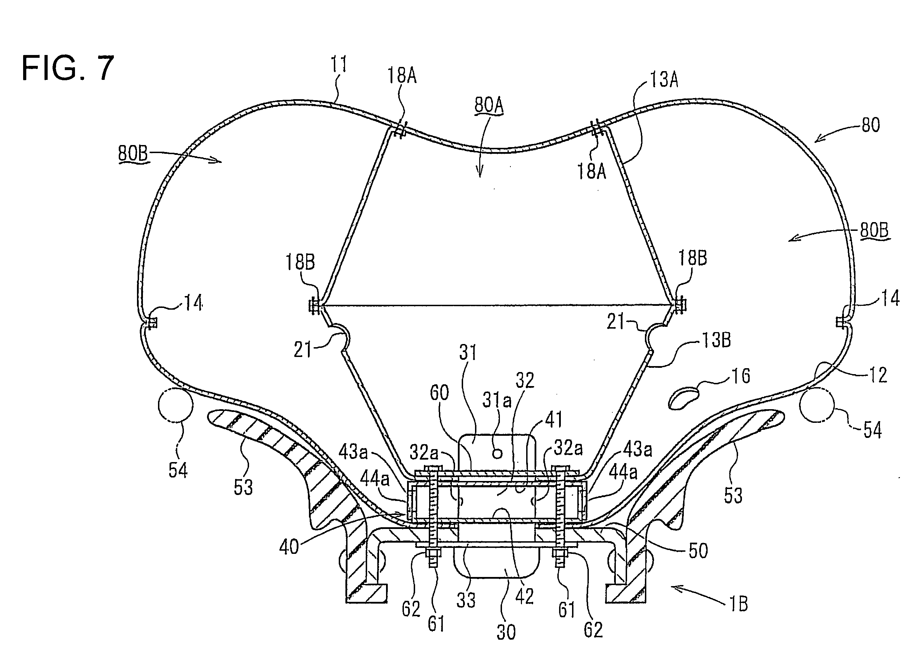

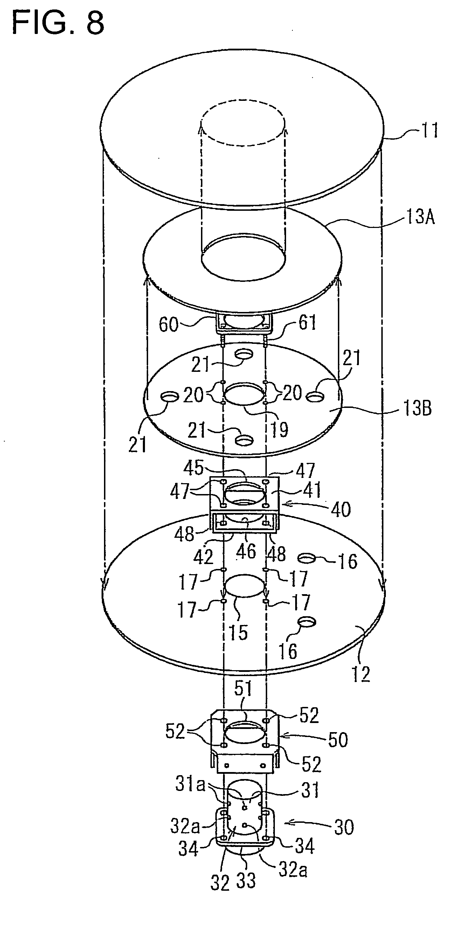

Fig. 7 is a vertical cross-sectional view of an airbag according to still another embodiment, and Fig. 8 is an exploded perspective view of the airbag apparatus.

An airbag apparatus 1B according to the present embodiment also includes an airbag 80 having the interior being partitioned into a first chamber 80A and a second chamber 80B, the inflator 30 (gas generator) for inflating the airbag 80, the flow control member (gas flow path defining member) 40 for allowing gas from the inflator 30 to flow independently into the first chamber 80A and the second chamber 80B, and the retainer 50 to which the airbag 80, the inflator 30, and the flow control member 40 are mounted.

With the airbag apparatus 1 shown in Fig. 1 to Fig. 3 described above, the interior of the airbag 10 is partitioned into the first chamber 1A at the center and the second chamber 10B surrounding the first chamber 10A by one single inner panel 13 continuing from the front panel 11 side to the rear panel 12 side. However, in the airbag apparatus 1B, the interior of the airbag 80 is partitioned into the first chamber 80A at the center and the second chamber 80B surrounding the first chamber 80A by a first inner panel 13A on the front panel 11 side and a second inner panel 13B on the rear panel 12 side.

In other words, as shown in Fig. 7, in this embodiment, the first inner panel 13A and the second inner panel 13B are provided in the airbag 80. The first and second inner panels 13A, 13B are disposed substantially concentrically with the front panel 11 and the rear panel 12 respectively, and the outer peripheral portions thereof are stitched by a seam 18B formed of a yarn or the like. The inner peripheral portion of the first inner panel 13A on the front panel 11 side (the peripheral portion on the distal side of the inner panel 13A in a state in which the airbag 80 is inflated) is stitched with the intermediate portion between the center portion and the peripheral portion of the front panel 11 by the seam 18A formed of a yarn or the like.

As shown in Fig. 8, at the center portion of the second inner panel 13B on the rear panel 12 side (the portion on the rear side of the second inner panel 13B in a state in which the airbag 80 is inflated), the opening 19 for an inflator which is disposed substantially concentrically with the opening 15 for an inflator on the rear panel 12 is provided. These openings 15, 19 have substantially the same diameter. The inner panel 13B is formed with the bolt insertion holes 20, which are aligned with the bolt insertion holes 17 of the rear panel 12, around the opening 19.

The second inner panel 13B is formed with the inner vent holes 21. The inner vent holes 21 may be provided on the first inner panel 13A.

The peripheral portion of the opening 19 for an inflator of the second inner panel 13B is joined by the retaining ring 60 to the peripheral portion of the opening 15 for an inflator of the rear panel 12 via the flow control member 40, and the peripheral portion of the inflator mounting port 51 of the retainer 50. Accordingly, the peripheral portion of the opening 19 for an inflator of the second inner panel 13B is joined to the peripheral portion of the opening 15 for an inflator of the rear panel 12 via the flow control member 40, then the outer peripheral portions of the first and second inner panels 13A, 13B are joined, and the inner peripheral portion of the first inner panel 13A is joined to the front panel 11.

The interior of the airbag 80 is partitioned into the first chamber 80A at the center and the second chamber 80B surrounding the first chamber 80A by the first and second inner panels 13A, 13B. The first chamber 80A is located inside the inner panels 13A, 13B.

In this airbag apparatus 1B as well, the distal side of the inflator 30 fitted into the inflator mounting port 51 is inserted into the openings 15, 19 for an inflator and, as shown in Fig. 7, the first gas generating unit 31 which comes first is disposed within the first chamber 80A, and the second gas generating unit 32 which comes below the first gas generating unit 31 is disposed within the flow control member 40 (the space between the top plate 41 and the bottom plate 42 which communicates to the inner space in the second chamber 80B). Therefore, when the inflator 30 (first and second gas generating units 31, 32) starts gas inflation, gas from the gas generating unit 31 is supplied only into the first chamber 80A in the first place, and gas from the second gas generating unit 32 is supplied only into the second chamber 80B in the first place via the flow control member 40.

Other structures of the airbag apparatus 1B are the same as the airbag apparatus 1 in Fig. 1 to Fig. 3 described above, and reference numerals in Fig. 7 and Fig. 8 which are the same as in Figs. 1 to 3 represent the same parts.

In this airbag apparatus 1B as well, when the inflator 30 (the first gas generating unit 31 and the second gas generating unit 32) starts gas inflation, gas from the first gas generating unit 31 is substantially supplied only into the first chamber 80A in the first place to contribute to the inflation of the first chamber 80A, and gas from the second gas generating unit 32 is supplied only to the second chamber 80B in the first place to contribute to the inflation of the second chamber 80B. Therefore, by controlling the output or the timing of activation of the first and second gas generating members 31, 32 independently, the sequence of inflation between the first chamber 80A and the second chamber 80B (the timing of initiation of inflation or the timing of completion of inflation) and the internal pressure upon inflation can be controlled independently.

In the airbag apparatus 1B, since the inner panel is formed of a connected combination of the first inner panel 13A on the front panel 11 side and the second inner panel 13B on the rear panel 12 side, designing for adjusting the thickness or the shape of the airbag 80 upon inflation can easily be made by adjusting the size of the first inner panel 13A or the second inner panel 13B.

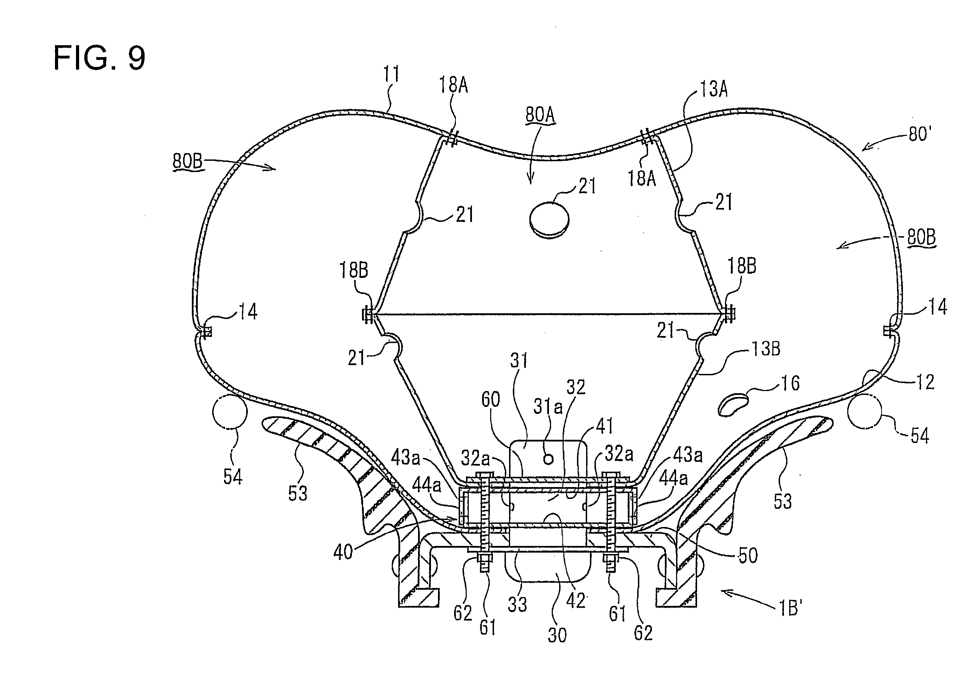

Although the inner vent hole 21 is provided on the second inner panel 13B in this embodiment, it is also possible to provide the inner vent hole 21 on the first inner panel 13A. Also, as an airbag 80' in an airbag apparatus 1B' in Fig. 9, the inner bent holes 21 can be provided both on the first inner panel 13A and the second inner panel 13B. Other structures of this airbag apparatus 1B' are the same as those in the airbag apparatus 1B shown in Fig. 7 and Fig. 8.

The respective embodiments described above are only examples of the present invention, and the present invention is not limited to the above-described embodiments.

For example, the number of chambers to be provided in the airbag may be three or more. Alternatively, a member for partitioning the interior of the airbag is not limited to a panel-shaped member, and may be of a tether type.

In the present invention, the airbag may be configured of three or more small airbags.

## Claims

1. An airbag apparatus comprising: an airbag (10; 80; 80') having a plurality of chambers (10A, 10B; 80A, 80B); and gas generating means (30) for inflating the airbag (10; 80; 80'), **characterized in that** supply of gas from the gas generating means to at least one of the chambers (10A, 10B; 80A, 80B) can be controlled independently from supply of gas from the gas generating means to other chambers (10A, 10B; 80A, 80B).

2. An airbag apparatus according to Claim 1, **characterized in that** the gas generating means includes an inflator (30) having a plurality of gas generating units (31, 32) capable of performing gas generating action independently, and gas from the respective gas generating units (31, 32) is supplied separately to the respective chambers (10A, 10B; 80A, 80B).

3. An airbag apparatus according to Claim 1, **characterized in that** the gas generating means includes a plurality of inflators capable of performing gas generating action independently, and gas from the respective inflators is supplied separately to the respective chambers (10A, 10B; 80A, 80B).

4. An airbag apparatus comprising: a plurality of airbags (70, 70A, 70B); and gas generating means for inflating the respective airbags (70, 70A, 70B), **characterized in that** supply of gas from the gas generating means to at least one of the airbags (70, 70A, 70B) can be controlled independently from supply of gas from the gas generating means to other airbags (70, 70A, 70B).

5. An airbag apparatus according to Claim 4, **characterized in that** the gas generating means includes an inflator (30) having a plurality of gas generating units (31, 32) capable of performing gas generating action independently, and gas from the respective gas generating units (31, 32) is supplied separately to the respective airbags (70, 70A, 70B).

6. An airbag apparatus according to Claim 4, **characterized in that** the gas generating means includes a plurality of inflators capable of performing gas generating action independently, and gas from the respective inflators is supplied separately to the respective airbags (70, 70A, 70B).
